# EUROPÄISCHE PATENTSCHRIFT

(11) **EP 2 631 615 B1**
(45) Veröffentlichungstag und Bekanntmachung des Hinweises auf die Patenterteilung: **18.11.2015**
(21) Anmeldenummer: 13000815.4
(22) Anmeldetag: 18.02.2013
(51) Int. Cl.: G01G 21/22, G01G 21/28, G01G 21/30

(54) **Waage**
Scales
Balance

(30) Priorität: 23.02.2012 DE 102012003406
(43) Veröffentlichungstag der Anmeldung: 28.08.2013
(73) Patentinhaber: Bizerba GmbH & Co. KG, 72336 Balingen (DE)
(72) Erfinder: Schlaich, Heinz, 72351 Geislingen (DE); Dietmann, Bernhard, 72415 Grosselfingen (DE)
(74) Vertreter: Köhler, Walter

(56) Entgegenhaltungen:
- US-A- 4 288 131

## Beschreibung

Die Erfindung betrifft eine Ladenwaage nach dem Oberbegriff des Anspruchs 1.

In der Praxis sind Ladenwaagen bekannt, die insbesondere im Frischeverkauf von Lebensmitteln zum Einsatz kommen.

In der EP 0 327 182 B1 ist eine solche Waage gezeigt. Dort wird eine Waage unterhalb einer Thekenplatte einer Verkaufstheke angeordnet. Eine abnehmbare Lastplatte greift durch vier abgedichtete Durchlässe in der Thekenplatte hindurch und kann zu Reinigungszwecken abgenommen werden. Diese Lösung benötigt einen baulichen Eingriff in die Theke. Sie ist also konstruktiv relativ aufwändig und zudem kann die Waage nicht optimal gereinigt werden.

Aus der DE 21 61 308 ist eine Ladenwaage bekannt, die auf einer erweiterten Stellfläche einer Kühltheke platziert werden kann.

Die US 4,288,131 A zeigt eine Badezimmerwaage, die an der Badezimmerwand in einem Wandgehäuse platzsparend verstaubar ist. Um zu Wiegen wird diese Badezimmerwaage aus dem Wandgehäuse herausgezogen und auf dem Boden des Badezimmers abgestellt.

Der Erfindung liegt die Aufgabe zugrunde, eine Ladenwaage zu schaffen, die im Frischeverkauf eingesetzt werden kann, die konstruktiv einfach aufgebaut und dabei gut zu reinigen ist.

Diese Aufgabe wird erfindungsgemäß durch eine Ladenwaage mit den Merkmalen des Anspruchs 1 gelöst.

Die Ladenwaage weist eine Kulissenführung auf, die dazu ausgebildet ist, die Wägezelle von einer Wiegeposition in eine Reinigungsposition zu verbringen. Die Kulissenbahn weist eine erste Kulissenbahn und eine zweite Kulissenbahn auf, wobei die zweite Kulissenbahn von der ersten Kulissenbahn in etwa mittig abzweigt. Dies ermöglicht eine exakte Führung der Wägezelle und eine ergonomisch optimierte Bedienung.

Die Wägezelle ist in einer Schale aufgenommen, die ein Gehäuse für die Waage bildet und zum Einbau in ein Thekenbrett oder zum Aufbau auf eine flache Oberfläche, wie beispielsweise ein eine Verkaufstheke vorgesehen ist. Die Schale kann dabei mechanisch fest verbunden mit der Oberfläche verbunden oder in der Oberfläche verankert sein. Die Verbindung kann durch Verschrauben oder Verkleben oder auch durch eine manuell lösbare Rastverbindung oder Klemmverbindung erfolgen.

Wiegeposition bezeichnet eine Position der Wägezelle, in der Güter auf eine Lastplatte aufgelegt und verwogen werden können. Die Lastplatte verläuft dabei in etwa parallel zu der Oberfläche der Theke. Als Reinigungsposition wird eine Position bezeichnet, bei der die Wägezelle um eine Schwenkachse verschwenkt ist, so dass auch der Bereich unterhalb der Wägezelle gereinigt werden kann. In der Reinigungsposition ist die Lastplatte von der Wägezelle abgenommen. Die Lastplatte kann separat gereinigt werden, beispielsweise in einer Spülmaschine.

Vorzugsweise ist die Seitenwand der Schale so ausgeführt, dass sie gegenüber der Oberfläche der Unterlage erhöht ist, und somit einen Rand ausbildet. Dadurch wird zum einen die Verschmutzung der Wägezelle reduziert, da Schmutz von der Oberfläche der Unterlage nicht direkt in das Innere der Schale gelangen kann. Zum anderen wird ein möglicher Kraftschluss des Wiegeguts mit der Unterlage verhindert, da dieses um den Rand erhöht über der Oberfläche der Unterlage angeordnet ist.

In einer Ausführung ist vorgesehen, dass die Wägezelle über zwei Führungselemente in der Kulissenführung gehaltert ist, um eine gute mechanische Stabilität und eine verbesserte Führung des Bewegungsablaufs der Wägezelle zu erzielen.

Um einen hygienische und einfach zu reinigende Ausführung zu schaffen, kann die Kulissenführung durch eine lösbare Blende abgedeckt sein, so dass kein Schmutz in die Kulissenbahnen gelangen kann.

Eine Anwendung der Waage ist insbesondere im Frischeverkauf von Lebensmitteln wie Fleisch, Wurst oder Käse vorgesehen. Durch die flache Bauform in Verbindung mit der reinigungsfreundlichen Ausführung kann die Waage vor allem im Thekenbereich an oder in einer Verkaufstheke eingesetzt werden. Die Anzeige von Wägedaten und oder der Druck eines Bons kann dabei über örtlich von der Waage abgesetzte Module, insbesondere Bedienterminals oder Drucker erfolgen, die mit der Waage über eine Kabelverbindung oder Funkverbindung verbunden sind.

Weitere Ausführungsbeispiele der Erfindung sind in den Figuren dargestellt und der dazugehörenden Beschreibung beschrieben.

Es zeigen,
- Figur 1:: Eine Draufsicht auf eine Ausführung der erfindungsgemäßen Waage;
- Figur 2:: Eine perspektivische Ansicht einer erfindungsgemäßen Waage;
- Figur 3:: Eine freigeschnittene Darstellung der Waage in Wiegeposition;
- Figur 3a:: Eine vergrößerte Darstellung der Kulissenführung aus Figur 3;
- Figur 4:: Eine freigeschnittene Darstellung der Waage beim Verbringen von der Wiegeposition in eine Reinigungsposition;
- Figur 4a:: Eine vergrößerte Darstellung der Kulissenführung aus Figur 4;
- Figur 5:: Eine freigeschnittene Darstellung der Waage beim Verbringen von der Wiegeposition in eine Reinigungsposition;
- Figur 5a:: Eine vergrößerte Darstellung der Kulissenführung aus Figur 5;
- Figur 6:: Eine freigeschnittene Darstellung der Waage in Reinigungsposition;
- Figur 6a:: Eine vergrößerte Darstellung der Kulissenführung aus Figur 6;

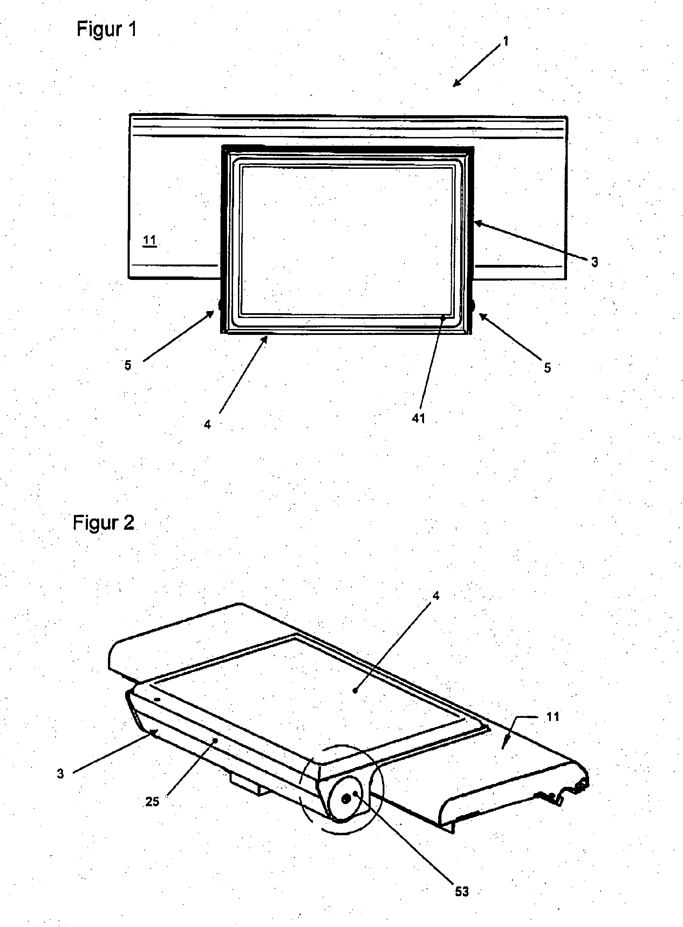

In der Figur 1 und der Figur 2 ist eine Waage 1 in der Wiegeposition dargestellt. Sie ist mit einem Thekenbrett 11 als Unterlage fest verbunden. Die Waage 1 weist als Gehäuse eine Schale 3 auf, die in einer Aussparung des Thekenbretts 11 aufgenommen ist. Die Schale 3 wird nach oben hin durch eine Lastplatte 4 abgeschlossen, wobei die Lastplatte 4 mit einer in der dargestellten Wiegeposition vollständig innerhalb der Schale 3 aufgenommenen Wägezelle 2 zum Erfassen des Gewichts von Wiegegut verbunden ist.

Auf die Lastplatte 4 kann Wiegegut zum Wiegen aufgelegt werden. An ihrer Oberseite weist die Lastplatte 4 eine eingefräste Saftrille auf, die aus dem Wiegegut austretende Flüssigkeit auffängt und so möglichst verhindert, dass diese in die Schale 3 fließt. Eine Anzeige des Gewichts und /oder Steuerung der Waage 1 erfolgt an einer nicht dargestellten, örtlich abgesetzten Bedien- und Anzeigeeinrichtung, welche über eine Kabelverbindung mit der Waage 1 verbunden ist.

Die Wägezelle 2 ist über eine Kulissenführung 5 drehbar in der Schale 3 gelagert. Dabei weist die Schale 3 zwei gegenüberliegende Seitenwände auf, in denen je eine Kulissenführung 5 angeordnet ist. Über eine abnehmbare Abdeckung 53 ist die Kulissenführung 5 gegen Verschmutzungen geschützt.

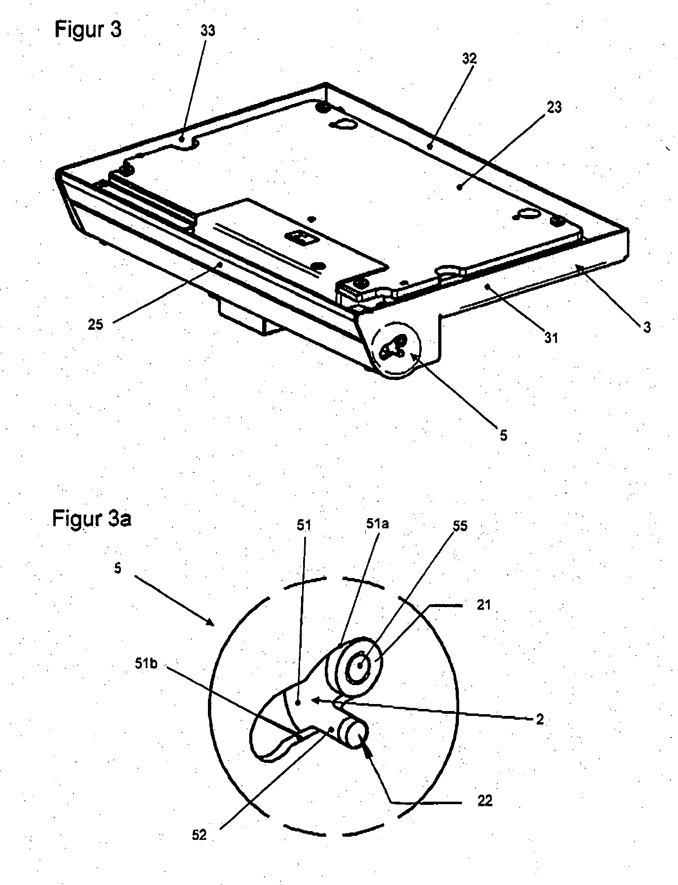

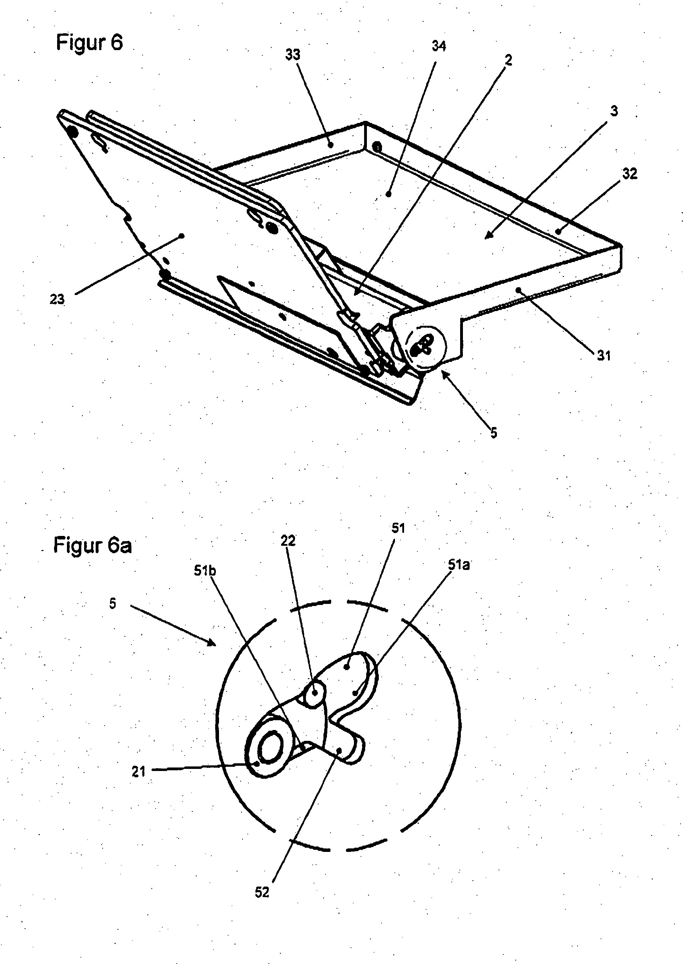

In den Figuren 3, 4, 5 und 6 ist der Bewegungsablauf der Waage beim Verbringen von der in der Figur 3 dargestellten Wiegeposition in eine in der Figur 6 dargestellte Reinigungsposition. Die Figuren 3a, 4a, 5a, 6a stellen jeweils eine Vergrößerung der Kulissenführung dar. Die Lastplatte 4 ist in diesen Darstellungen bereits abgenommen.

Die Waage 1 weist eine Schale 3 mit einem geschlossenen Boden 34 und drei Seitenwänden 31, 32, 33 auf. In den sich gegenüberliegenden Seitenwänden 31 und 32 ist jeweils eine Kulissenführung 5 angeordnet, die eine Wägezelle 2 verschwenkbar und linear verschiebbar haltert. Die Wägezelle 2 ist mit einem Lastprofil 23 verbunden, welches eine Lastplatte 4 haltert und zur Übertragung der Gewichtskraft auf die Wägezelle 2 dient. Auf der dem Bediener zugewandten Seite ist die Wägezelle mit einer Blende 25 verbunden, die die Schale 3 in der Wiegeposition zum Bediener hin abdeckt. Somit ist die Schale 3 in der Wiegeposition allseits geschlossen. Beim Verbringen der Waage 1 in die Reinigungsposition wird die Blende 25 zusammen mit der Wägezelle 2 verschwenkt.

Die Kulissenführung 5 weist zwei Kulissenbahnen 51 und 52 auf. Die zweite Kulissenbahn 52 zweigt etwa mittig von der ersten Kulissenbahn 51 ab und teilt diese in zwei Abschnitte 51a und 51b. Die Wägezelle 2 ist über jeweils 2 Führungselemente 21 und 22 in den Kulissenbahnen geführt. Die Führungselemente 21 und 22 sind als runde Stifte ausgebildet. Die Abmessungen der Führungselemente 21 und 22 sind an die Dimensionen der Kulissenbahnen angepasst. Das erste Führungselement 21 weist einen größeren Durchmesser als das zweite Führungselement 22 auf. Zur Halterung der Blende 53 weist das erste Führungselement 21 ein Gewinde 55 auf, mittels dem die Blende 53 abnehmbar befestigt werden kann.

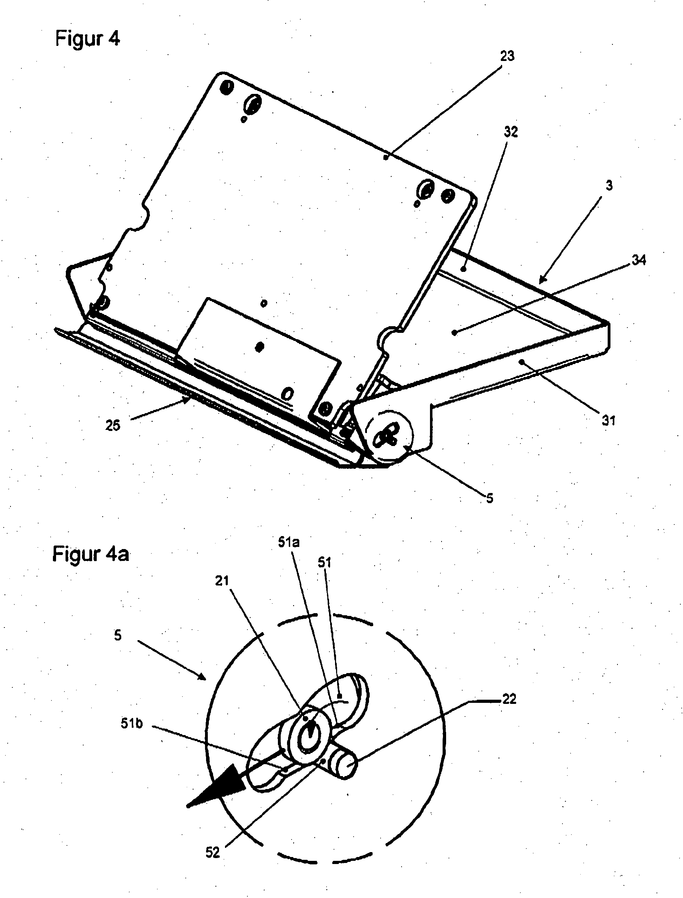

In der in den Figuren 3 und 3a dargestellten Wiegeposition ist die Wägezelle 2 über das erste Führungselement 21 in der ersten Kulissenbahn 51 und über das zweite Führungselement 22 in der zweiten Kulissenbahn 52 gelagert. Zum Verbringen der Waage in eine in den Figuren 6 und 6a dargestellten Reinigungsposition kann das Halteprofil 23 gefasst und nach oben gedreht werden. Dabei dient das Zweite Führungselement 22 als Drehpunkt. Das erste Führungselement 21 wird entlang der in dem ersten, kreisförmig verlaufenden Abschnitt 51a der ersten Kulissenbahn 51 geführt und dabei um das zweite Führungselement 22 geschwenkt. In den Figuren 4 und 4a ist das Ende dieser Schwenkbewegung gezeigt. An diese Schwenkbewegung schließt sich eine lineare Bewegung an, die entlang des Pfeiles in Figur 4 verläuft und die Wägezelle 2 aus der Schale 3 heraus führt. Durch diese Bewegung wird in der Reinigungsposition mehr Platz gewonnen und es ist eine komfortable Reinigung möglich. Der zweite Abschnitt 51b der ersten Kulissenbahn 51 ist daher zumindest abschnittsweise gerade verlaufend ausgebildet.

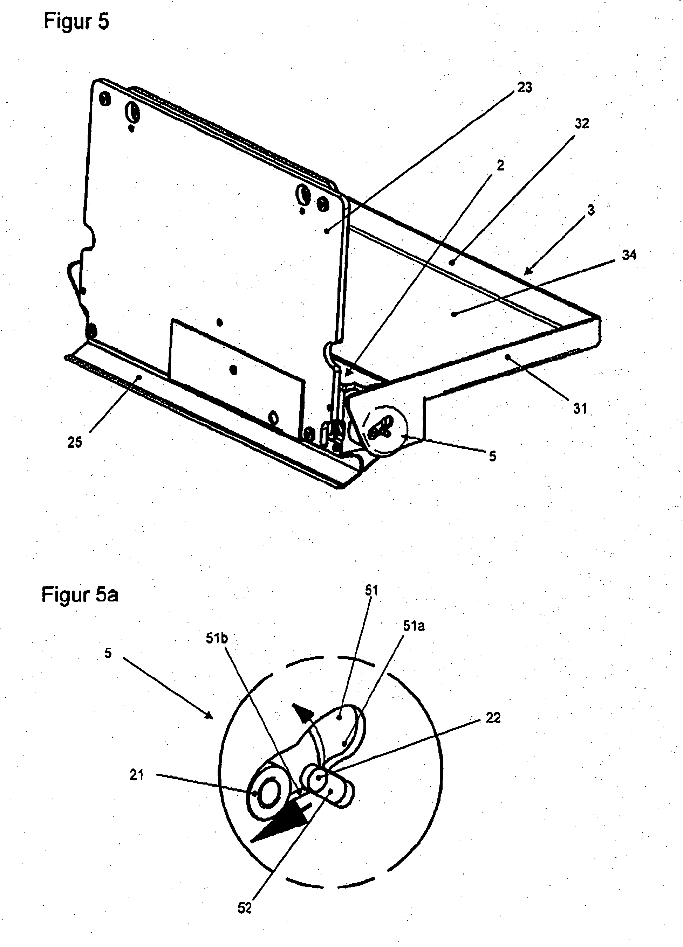

Bei der weiteren Bewegung in Richtung Reinigungsposition wird, wie in den Figuren 5 und 5a dargestellt, das erste Führungselement 21 zu einem Drehpunkt um den das zweite Führungselement 22 geschwenkt wird. Diese Drehbewegung wird durch das als Anschlag ausgebildete zweite Führungselement 22 begrenzt, indem dieses an der oberen Kante der ersten Kulissenbahn 51 in Anlage kommt, wie in den Figuren 6 und 6a dargestellt ist.

Die Verbringung der Waage von der Reinigungsposition in die Wiegeposition erfolgt sinngemäß genau umgekehrt, wobei am Ende der Bewegung noch die Lastplatte 4 auf die Lastverteilplatte 23 aufgesetzt wird.

Die Lastplatte 4 ist abnehmbar und kann als massive Holzplatte, Kunststoffplatte oder als Marmorplatte ausgebildet sein. Damit kann unter gestalterischen Gesichtspunkten die jeweils passende Lastplatte verwendet werden. Es ist auch vorgesehen, aus einem Sortiment verschiedene gegeneinander austauschbare Lastplatten 4 einzusetzen. Das unterschiedliche Gewicht der einzelnen Lastplatten wird über eine Tarafunktion an der Waage ausgeglichen.

## Patentansprüche

1. Ladenwaage mit einer Wägezelle (2) zum Erfassen des Gewichts von Wiegegut und einer mit dieser zusammenwirkenden und abnehmbaren Lastplatte (4) zum Auflegen von Wiegegut, wobei die Wägezelle (2) in der Wiegeposition vollständig innerhalb einer Schale (3) angeordnet ist und über eine Kulissenführung (5) von einer Wiegeposition in eine Reinigungsposition verbringbar ist, bei der die Wägezelle um eine Schwenkachse verschwenkt ist, um den Bereich unterhalb der Wägezelle zu reinigen,
**dadurch gekennzeichnet,**
**dass** die Kulissenführung (5) zwei Kulissenbahnen (51, 52) aufweist, wobei die zweite Kulissenbahn (52) von der ersten Kulissenbahn (51) abzweigt.

2. Ladenwaage nach Anspruch 1,
**dadurch gekennzeichnet,**
**dass** die Wägezelle (2) über zwei Führungselemente (21, 22) in einer Kulissenführung (5) gehaltert ist.

3. Ladenwaage nach Anspruch 1 oder 2,
**dadurch gekennzeichnet,**
**dass** in der Wiegeposition das erste Führungselement (21) in der ersten Kulissenbahn (51) und das zweite Führungselement (22) in der zweiten Kulissenbahn (52) geführt ist.

4. Ladenwaage nach Anspruch 2 oder 3,
**dadurch gekennzeichnet,**
**dass** in der Reinigungsposition beide Führungselemente (21, 22) in der ersten Kulissenbahn (51) geführt sind.

5. Ladenwaage nach einem der Ansprüche 2 bis 4,
**dadurch gekennzeichnet,**
**dass** das zweite Führungselement (22) in der Wiegeposition einen Drehpunkt definiert um den das erste Führungselement (21) drehbar ist.

6. Ladenwaage nach einem der Ansprüche 2 bis 5,
**dadurch gekennzeichnet,**
**dass** das erste Führungselement (21) in der Reinigungsposition einen Drehpunkt definiert um den das zweite Führungselement (22) drehbar ist und vorzugsweise das zweite Führungselement (22) einen Anschlag ausbildet um die Drehung zu begrenzen.

7. Ladenwaage nach einem der vorhergehenden Ansprüche,
**dadurch gekennzeichnet,**
**dass** die Kulissenführung (5) durch eine Blende (53) abgedeckt ist.

8. Ladenwaage nach Anspruch 7,
**dadurch gekennzeichnet,**
**dass** die Blende (53) abnehmbar an dem ersten Führungselement (21) gehaltert, vorzugsweise verschraubt, ist.

9. Ladenwaage nach einem der vorhergehenden Ansprüche,
**dadurch gekennzeichnet,**
**dass** zwei Kulissenführungen (5) vorgesehen sind, wobei je eine Kulissenführung in einer Seitenwand der Schale (3) angeordnet ist.

## Claims

1. Shop scales with a load cell (2) to detect the weight of weighing goods and a removable load plate (4) which interacts with this to apply weighing goods, wherein, in the weighing position, the load cell (2) is arranged completely within a shell (3) and is able to be brought from a weighing position into a cleaning position via a sliding block guide (5), in which cleaning position the weighing cell is pivoted around a pivot axis in order to clean the region underneath the load cell,
**characterised in that**
the sliding block guide (5) has two sliding block tracks (51, 52), wherein the second sliding block track (52) branches off from the first sliding block track (51).

2. Shop scales according to claim 1,
**characterised in that**
the load cell (2) is heldin a sliding block guide (5) via two guide elements (21, 22).

3. Shop scales according to claim 1 or 2,
**characterised in that**
in the weighing position, the first guide element (21) is guided in the first sliding block track (51) and the second guide element (22) is guided in the second sliding block track (52).

4. Shop scales according to claim 2 or 3,
**characterised in that**
in the cleaning position, both guide elements (21, 22) are guided in the first sliding block track (51).

5. Shop scales according to one of claims 2 to 4,
**characterised in that**
in the weighing position, the second guide element (22) defines a fulcrum around which the first guide element (21) is able to rotate.

6. Shop scales according to one of claims 2 to 5,
**characterised in that**
in the cleaning position, the first guide element (21) defines a fulcrum around which the second guide element (22) is able to rotate and preferably the second guide element (22) forms a stop in order to limit the rotation.

7. Shop scales according to one of the preceding claims,
**characterised in that**
the sliding block guide (5) is covered by a panel (53).

8. Shop scales according to claim 7,
**characterised in that**
the panel (53) is held removably on, preferably screwed to, the first guide element (21).

9. Shop scales according to one of the preceding claims,
**characterised in that**
two sliding block guides (5) are provided, wherein each sliding block guide is arranged in a side wall of the shell (3).

## Revendications

1. Balance de magasin comprenant une cellule de pesée (2) servant à détecter le poids d'articles à peser et un plateau de charge (4) coopérant avec ladite cellule de pesée et pouvant être retiré servant à recevoir des articles à peser, sachant que la cellule de pesée (2) est disposée intégralement à l'intérieur d'une coque (3) dans la position de pesage et peut être amenée par l'intermédiaire d'un système de guidage à coulisse (5) d'une position de pesage dans une position de nettoyage, dans le cadre de laquelle la cellule de pesée est pivotée autour d'un axe de pivotement afin de nettoyer la zone sous la cellule de pesée,
**caractérisée en ce**
**que** le système de guidage à coulisse (5) présente deux glissières (51, 52), sachant que la deuxième glissière (52) forme une bifurcation à partir de la première glissière (51).

2. Balance de magasin selon la revendication 1,
**caractérisée en ce**
**que** la cellule de pesée (2) est maintenue dans un système de guidage à coulisse (5) par l'intermédiaire de deux éléments de guidage (21, 22).

3. Balance de magasin selon la revendication 1 ou 2,
**caractérisée en ce que** dans la position de pesée, le premier élément de guidage (21) est guidé dans la première glissière (51) et le deuxième élément de guidage (22) est guidé dans la deuxième glissière (52).

4. Balance de magasin selon la revendication 2 ou 3,
**caractérisée en ce**
**que** dans la position de nettoyage, les deux éléments de guidage (21, 22) sont guidés dans la première glissière (51).

5. Balance de magasin selon l'une quelconque des revendications 2 à 4,
**caractérisée en ce**
**que** le deuxième élément de guidage (22) définit, dans la position de pesée, un point de rotation, autour duquel le premier élément de guidage (21) peut tourner.

6. Balance de magasin selon l'une quelconque des revendications 2 à 5,
**caractérisée en ce**
**que** le premier élément de guidage (21) définit, dans la position de nettoyage, un point de rotation, autour duquel le deuxième élément de guidage (22) peut tourner, et
en ce que de préférence le deuxième élément de guidage (22) réalise une butée, afin de limiter la rotation.

7. Balance de magasin selon l'une quelconque des revendications précédentes,
**caractérisée en ce**
**que** le système de guidage à coulisse (5) est recouvert par un cache (53).

8. Balance de magasin selon la revendication 7,
**caractérisée en ce**
**que** le cache (53) est maintenu, de préférence est vissé, au niveau du premier élément de guidage (21) de manière à pouvoir être retiré.

9. Balance de magasin selon l'une quelconque des revendications précédentes,
**caractérisée en ce**
**que** deux systèmes de guidage à coulisse (5) sont prévus, sachant que respectivement un système de guidage à coulisse est disposé dans une paroi latérale de la coque (3).
